# EUROPEAN PATENT SPECIFICATION

(11) **EP 2 971 525 B1**
(45) Date of publication and mention of the grant of the patent: **06.02.2019**
(21) Application number: 13877513.5
(22) Date of filing: 13.12.2013
(51) Int. Cl.: F01D 5/14, F02C 7/00, F01D 5/02, F01D 5/28, F02C 3/04, F01D 25/04, F04D 29/32, F01D 21/04

(54) **FRANGIBLE SHEATH FOR A FAN BLADE OF A GAS TURBINE ENGINE**
ZERBRECHLICHE HÜLLE FÜR EINE GEBLÄSESCHAUFEL EINES GASTURBINENTRIEBWERKS
GAINE FRANGIBLE POUR PALE DE SOUFFLANTE DE MOTEUR À TURBINE À GAZ

(30) Priority: 14.03.2013 US 201361782789 P
(43) Date of publication of application: 20.01.2016
(73) Proprietor: United Technologies Corporation, Farmington, CT 06032 (US)
(72) Inventor: MOFFITT, James, H., Manchester, CT 06040 (US)
(74) Representative: Dehns
(86) International application number: PCT/US2013/075060
(87) International publication number: WO 2014/143256

(56) References cited:
- EP-A2- 0 863 072
- US-A- 5 725 354
- US-A- 5 827 045
- US-A- 5 908 285
- US-A1- 2006 275 626
- US-A1- 2011 033 308
- US-A1- 2011 194 941
- US-A1- 2011 211 967
- US-A1- 2012 003 100
- US-A1- 2012 301 292
- US-B2- 8 075 274

## Description

### Field of the Disclosure

The present disclosure generally relates to gas turbine engines and, more specifically, to blades of a fan for a gas turbine engine.

### Background of the Disclosure

Gas turbine engines generally have a plurality of axially aligned components including a fan, a compressor section, a combustor, and a turbine section. The fan, positioned at a forward end of the engine, rotates to draw in and pressurize ambient air. Some of the pressurized air flows to the compressor section as a core flow while the remainder of the air flows out of the engine to generate thrust. The core flow is compressed in the compressor section and then flows to the combustor where the compressed air is mixed with fuel and combusted to form an exhaust. The exhaust expands from the combustor through the turbine section, causing turbines of the turbine section to rotate, and then flows out of the engine at an aft end of the engine. The rotation of the turbines drives the rotation of the fan and compressors by way of a shaft, or a plurality of concentrically mounted shafts in the case of a multi-spool engine.

In gas turbine engines, it is typically preferable to reduce the weight of each component in order to reduce the energy requirements of moving the engine during operation and provide as much thrust for moving a load placed on the engine as possible. Since the fan contributes a great deal of the weight associated with the engine, technology continues to advance in fan weight reduction. One method of reducing the weight is to incorporate lighter materials into components of the fan such as into areas of any blades of the fan. However, some of the more preferential materials lack the structural strength required by a fan to operate effectively, such as the strength to resist a bird or debris strike. In order to alleviate the deficient strength characteristics of such materials, methods have been developed to provide the necessary strength to select areas of the blades. One such method is presented in United States Patent Application Publication 2011/0211967 A1.

This method teaches the use of a sheath extending along a leading edge of each blade. This sheath is formed from typical blade materials, such as titanium alloy, to protect the weaker portions of the blade from incoming debris. While effective at protecting the blade from smaller debris damage, larger debris may still cause damage. Such damage reduces the life span of the blade, can cause airflow problems for the engine, and lessens the efficiency of the engine. As such, a new method for resisting debris damage to such blades is necessary.

US 2006/275626 A1 discloses a protection part for the leading edge of a blade, comprising an inner layer made of an aluminum alloy and an outer layer made of an aluminum alloy reinforced with particles of SiC.

US 2012/301292 A1 discloses a fan blade having a high strength metal sheath formed from titanium or nickel alloy.

### Summary of the Disclosure

Viewed from one aspect the present invention provides a rotor for a gas turbine engine according claim 1.

In accordance with one aspect of the disclosure, a rotor for a fan of a gas turbine engine is disclosed. The rotor includes a rotor disk and a fan blade extending radially outward from the rotor disk. The fan blade has a leading edge and a sheath may extend along the leading edge of the fan blade. The sheath is formed from a brittle material having a molecular structure causing the brittle material to shatter or crack upon impact as opposed to bending or deforming.

In a refinement, an adhesive may join the sheath to the leading edge.

In another refinement, the brittle material may be an aluminum alloy.

In another refinement, the brittle material may be a fiber-reinforced composite.

In still another refinement, the blade may be made of aluminum.

In accordance with another aspect of the present disclosure, a gas turbine engine is disclosed. The engine includes a fan section having a disk and a plurality of blades extending radially outward from the disk. Each blade may has a leading edge and a sheath extending along the leading edge of the blade. The sheath is formed from a brittle material having a molecular structure causing the brittle material to shatter or crack upon impact as opposed to bending or deforming. The engine further includes a compressor section downstream of the fan section, a combustor downstream of the compressor section, and a turbine section downstream of the combustor.

In a refinement, an adhesive may join the sheath to the leading edge.

In another refinement, the brittle material may be an aluminum alloy.

In another refinement, the brittle material may be a fiber-reinforced composite.

In yet another refinement, the blade may be made of aluminum.

Viewed from another aspect there is provided a method of protecting a rotor of a gas turbine engine according to claim 8.

In accordance with an aspect of the present disclosure, a method of protecting a rotor of a gas turbine engine is disclosed. The method includes providing a rotor having a rotor disk and a plurality of fan blades extending radially outward from the rotor disk. Each fan blade has a leading edge and a sheath extending along the leading edge of the fan blade. The sheath is formed from a brittle material. The method further includes rotating the rotor and impacting the sheath with an object at an impact site. The sheath absorbs energy from the object at the impact site.

In a refinement, a piece of the sheath at the impact site may be liberated in response to absorbing energy from the object.

In another refinement, the sheath may crack at the impact site in response to absorbing energy from the object.

In another refinement, the rotor may remain rotating after being impacted by the object.

In another refinement, the method may further include deflecting the object away from the rotor with the sheath when the object impacts the sheath.

In yet another refinement, the method may further include adhesively bonding the sheath to the blade.

In still another refinement, the method may further include forming the sheath from an aluminum alloy.

In still another refinement, the method may further include forming the blade form aluminum.

These and other aspects and features of the present disclosure will be better understood in light of the following detailed description when read in light of the accompanying drawings.

### Brief Description of the Drawings

FIG. 1 is a partial cross-sectional view of a gas turbine engine constructed in accordance with an embodiment of the present disclosure.
FIG. 2 is a perspective view of a fan blade constructed in accordance with an embodiment of the present disclosure.
FIG. 3 is a cross-sectional view of the fan blade of FIG. 2 taken along the line 3-3 of FIG. 2.
FIG. 4 is a perspective view of another fan blade constructed in accordance with an embodiment of the present disclosure and detailing damage.

It should be understood that the drawings are not necessarily to scale and that the disclosed embodiments are sometimes illustrated diagrammatically and in partial views. In certain instances, details which are not necessary for an understanding of this disclosure or which render other details difficult to perceive may have been omitted. It should be understood, of course, that this disclosure is not limited to the particular embodiments illustrated herein.

### Detailed Description

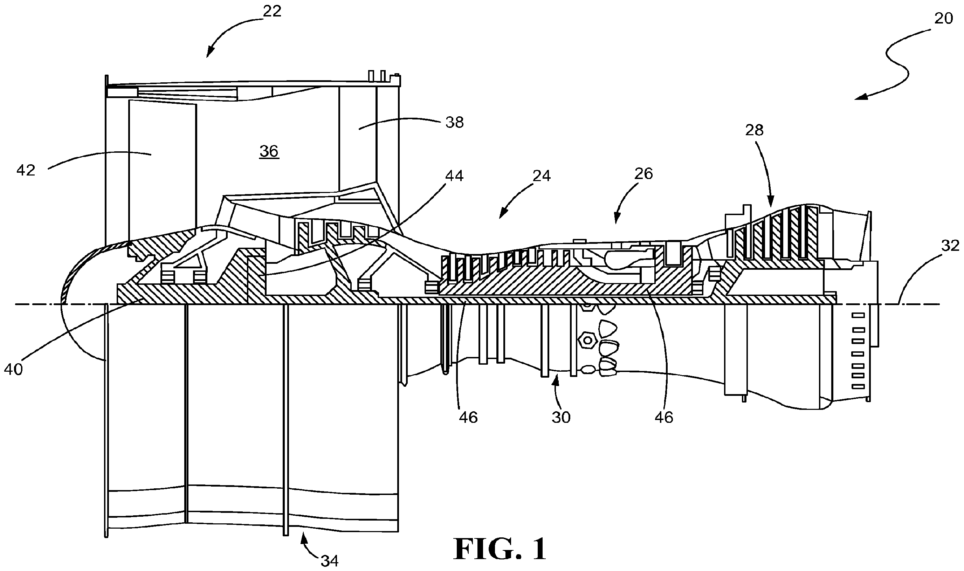

Referring now to the drawings and with specific reference to FIG. 1, a gas turbine engine 20 is depicted as a geared turbofan engine. However, other engine types are possible and FIG. 1 is simply one embodiment illustrated here for description purposes. The engine 20 may include a plurality of components, including a fan section 22, a compressor section 24 downstream from the fan section 22, a combustor 26 downstream from the compressor section 24, a turbine section 28 downstream from the combustor 26, and an engine case 30 surrounding the core engine components, aligned axially along an engine axis 32.

A fan case 34 may be positioned radially outward from the engine case 30 and fan section 22 with respect to the engine axis 32 and cooperating with the engine case 30 to define a bypass air flow path 36 therebetween. A plurality of exit guide vanes 38 may extend between the engine case 30 and the fan case 34 to reorient air exiting the fan section 22 into a more preferable direction. The fan section 22 (or rotor) may include a rotor disk or hub 40 and a plurality of fan blades 42 radially extending outward from the rotor disk 40. In the illustrated engine 20, the rotor disk 40 of the fan section 22 is mechanically connected to a gearbox 44, which transfers rotational motion from the turbine section 28 via an engine shaft 46 extending through the engine 20 along the engine axis 32. The gearbox 44 allows the fan section 22 to be rotated at a different speed than the compressor section 24.

By rotating about the axis 32, the fan blades 42 draw in and pressurize ambient air. In the illustrated engine 20, a majority of the pressurized air flows along the bypass air flow path 36 to generate the primary source of thrust of the engine 20. Some of the air pressurized by the fan section 22 also enters the engine 20 through a core air flow path 37 where the air is compressed, combusted, and then expanded. The air from the core air flow path 37 generates thrust, but also rotates rotors in the turbine section 28, which may generate electricity and rotate the fan blades 42 and rotors in the compressor section 24 via the engine shaft 46. FIG. 1 depicts the engine 20 as a dual-spool geared turbofan engine having an annular combustor; however, this is simply for illustration purposes and any gas turbine engine is possible such as a single or a three spool engine, for example.

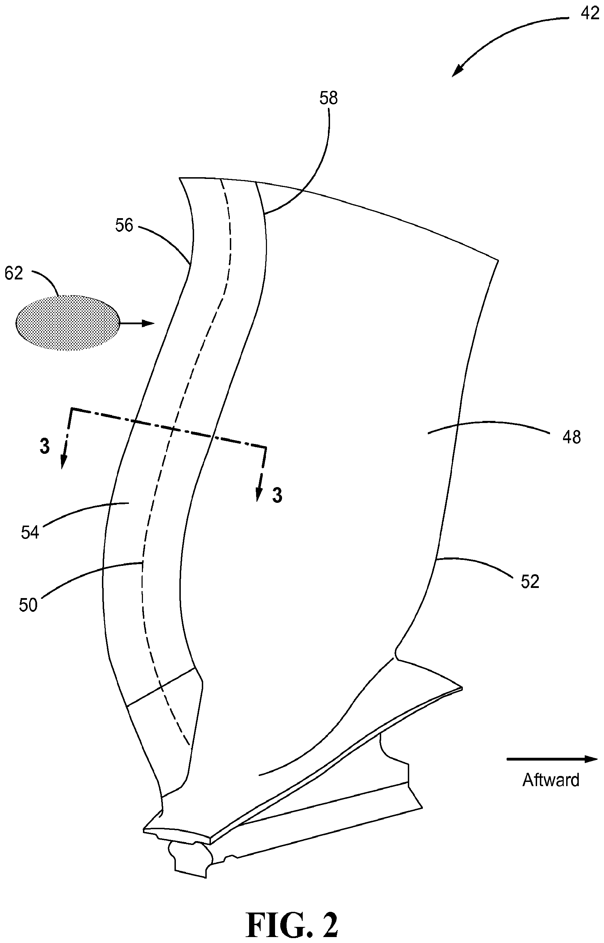

As can be seen in FIG. 2, each of the fan blades 42 has a body 48, a leading edge 50, and a trailing edge 52. The leading edge 50 of a typical blade interacts with incoming air first, while the trailing edge 52 interacts with outgoing air last. Many materials may be used to construct the fan blades 42 such as, but not limited to, titanium alloys, aluminum alloys, nickel alloys, and the like.

Many materials may have a desirable light weight, but not have the necessary structural strength to be utilized as a fan blade. This may be due to a brittleness of the material, a tendency to deflect, or other structural weaknesses. For example, fiber-reinforced composites are extremely light weight, but do not by themselves have the necessary structural characteristics needed to serve as a fan blade. Similarly, aluminum is light weight as well, but lacks, by itself, sufficient ductility and resilience.

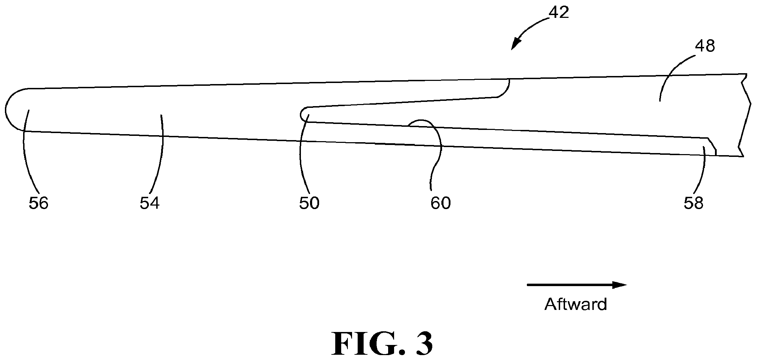

In order to utilize such materials, but continue to have a structurally sound fan blade, the present disclosure therefore greatly improves upon the prior art. More specifically a sheath 54 may be positioned covering the leading edge 50 of the fan blade 42. The sheath 54 has a forward edge 56 and an aft edge 58. The forward edge 56 may be aligned along the leading edge 50 or the sheath 54 may extend forward of the leading edge 50 and the forward edge 56 may be positioned forward of the leading edge 50 as illustrated in FIGS. 2 and 3. This positioning causes the forward edge 56 of the sheath 54 to interact with incoming air first, while the leading edge 50 of the fan blade 42 does not interact with air at all. The aft edge 58 of the sheath 54may be positioned aftward of the leading edge 50 and in contact with the body 48.

As shown best in FIG. 3, an aftward surface 60 of the sheath 54 may also be in contact with the body 48 and leading edge 50 of the fan blade 42. Any number of methods may be used to create a joint between the aftward surface 60 and the body 48 such as, but not limited to, adhesively bonding the sheath 54 and body 48 together. The sheath 54 may be formed of a structurally strong material to protect the blade 42 from debris and bird impacts and thereby allow the weaker materials to be utilized throughout the body 48.

In order to better resist global deflection, global cracking, and/or liberation of the blade 42 from debris or bird impacts, the sheath 54 may be formed from a structurally strong, but brittle, material such as, but not limited to, an aluminum alloy, such as pandalloy™, or a fiber-reinforced composite. As used herein, "brittle" means a material having a molecular structure causing such material to shatter or crack upon impact, as opposed to bending or deforming. The blade in turn, may then be made of materials heretofore thought to be insufficient for use as a blade, such as, but not limited to fiber-reinforced composite and aluminum.

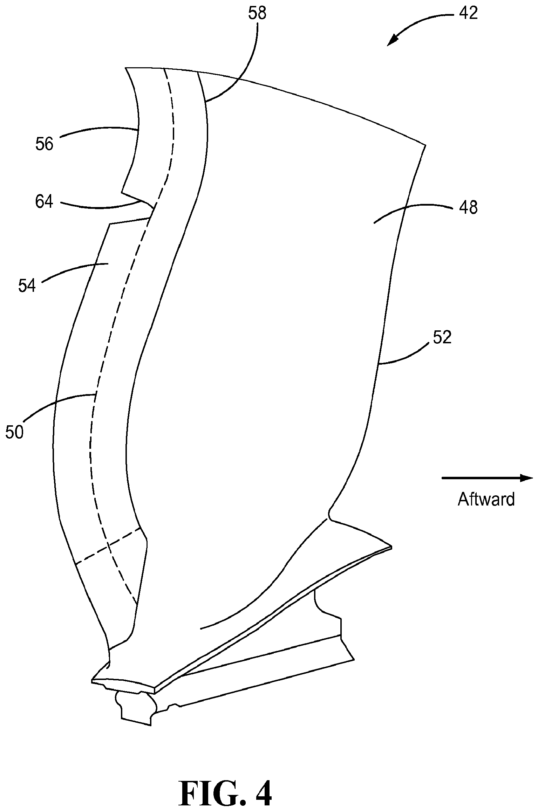

In doing so, when the blade 42 is impacted by debris 62, energy may be transferred to, and absorbed by, the sheath 54 from the debris 62 as opposed to being directly relayed to the blade. For a small bird or debris impact, the strength of the sheath 54 may allow the fan blade 42 to resist deflection and damage and may increase fly-back of the bird or debris. A medium or large bird or debris impact, on the other hand, may form a crack in the sheath 54, or a piece of the sheath 54 may be liberated at an impact site 64 on the sheath 54, such as in FIG. 4 due to the brittle nature of the materials. While somewhat damaging to the blade 42, such a local crack or liberation is significantly better than the prior art in that it maintains the operability of the fan blade 42 and engine 20. More specifically, the sheath 54 reduces any global deflection of the blade 42 by absorbing enough of the energy from the impact to allow the body 48 to resist any deflection or cracking. Thereby, the frangible sheath of the present disclosure may reduce any global effects on the fan section 22 and/or airflow through the engine 20 from the debris or bird impact and allow the fan section 22 to remain operative, as opposed to a global deflection or liberation of the fan blade 42 that may leave the engine inoperative or reduce engine efficiency greatly.

As used herein the term "global" refers to an entire structure, such as an entire fan blade when discussing an impact site, or an entire fan section when discussing an individual fan blade. Additionally, the term "local" refers to a specific or limited area of an overall structure, such an impact site on a fan blade. Moreover, while the foregoing description has been made with reference to fan blades, it is to be understood that these teachings can be employed with equal efficacy to other airfoils of the engine including, but not limited to, compressor and turbine blades and vanes.

### Industrial Applicability

From the foregoing, it can be seen that the technology disclosed herein has industrial applicability in a variety of settings such as, but not limited to providing a means for resisting global deflection or global damage for a fan blade of a rotor. This may be accomplished by providing a sheath along a leading edge of blade and forming the sheath from strong, but brittle materials. The sheath then may locally crack or a piece of the sheath may be liberated in response to an impact, protecting the entire fan blade from damage or deflection.

While the present disclosure has been made in reference to a gas turbine engine and an aircraft, and specifically to a fan for a gas turbine engine, one skilled in the art will understand that the teachings herein can be used in other applications as well such as, but not limited to, any rotor having a plurality of radially extending blades where debris impacts and global deflection or damage of/to the blades is a concern. It is intended that the scope of the invention not be limited by the embodiments presented herein as the best mode for carrying out the invention, but that the invention include all equivalents falling within the scope of the appended claims as well.

## Claims

1. A rotor for a fan of a gas turbine engine, comprising:
a rotor disk (40); and
a fan blade (42) extending radially outward from the rotor disk (40), the fan blade (42) having a leading edge (50) and wherein the fan blade (42) is formed from a first material; and
a sheath (54) extending along the leading edge (50) of the fan blade (42), the sheath (54) being formed from a second material different from the first material: **characterized by** the second material being a brittle material having a molecular structure causing the brittle material to shatter or crack upon debris or bird impact on the sheath (54), wherein the sheath (54) will shatter or crack prior to a deflection of the fan blade (42) due to the debris or bird impact on the sheath (54), wherein global deflection of the fan blade (42) due to the debris or bird impact on the sheath (54) is reduced by absorption of the energy from the impact by the sheath (54).

2. The rotor of claim 1, wherein an adhesive joins the sheath (54) to the leading edge (50) of the fan blade (42).

3. The rotor of claim 1, wherein the brittle material is an aluminum alloy.

4. The rotor of claim 1, wherein the brittle material is a fiber-reinforced composite.

5. The rotor of claim 1, where the fan blade (42) is made of aluminum.

6. A gas turbine engine (20), comprising:
a fan section (22) having a rotor as in claim 1, the rotor disk (40) having a plurality of fan blades (42) extending radially outward from the rotor disk (40), each fan blade (42) having a leading edge (50) and wherein each fan blade (42) being formed from a first material and a sheath (54) extending along the leading edge (50) of the fan blade (42), the sheath (54) being formed from a second material different from the first material, the second material being a brittle material having a molecular structure causing the brittle material to shatter or crack upon debris or bird impact on the sheath (54), wherein the sheath (54) will shatter or crack prior to a deflection of the fan blade (42) due to the debris or bird impact on the sheath (54), wherein global deflection of the fan blade (42) due to the debris or bird impact on the sheath (54) is reduced by absorption of the energy from the impact by the sheath (54);
a compressor section (24) downstream of the fan section (22);
a combustor (26) downstream of the compressor section (24); and
a turbine section (28) downstream of the combustor (26).

7. The gas turbine engine (20) of claim 6, wherein an adhesive joins the sheath (54) to the leading edge (50) of the fan blade (42), or wherein the brittle material is an aluminum alloy, or wherein the brittle material is a fiber-reinforced composite, or wherein the fan blade (42) is made of aluminum.

8. A method of protecting a rotor of a gas turbine engine, comprising:
providing the rotor, the rotor having a rotor disk (40) and a plurality of fan blades (42) extending radially outward from the rotor disk (40), each fan blade (42) being formed from a first material and having a leading edge (50) and a sheath (54) extending along the leading edge (50) of the blade (42), the sheath (54) being formed from a second material different from the first material, the second material being a brittle material having a molecular structure causing the brittle material to shatter or crack upon debris or bird impact on
the sheath (54), wherein the sheath (54) will shatter or crack prior to a deflection of the fan blade (42) due to the debris or bird impact on the sheath (54), wherein global deflection of the fan blade (42) due to the debris or bird impact on the sheath (54) is reduced by absorption of the energy from the impact by the sheath (54);
rotating the rotor; and
impacting the sheath (54) with an object at an impact site (64), the sheath (54) absorbing energy from the object at the impact site (64).

9. The method of claim 8, wherein a piece of the sheath (54) at the impact site is liberated in response to absorbing energy from the object, or wherein the sheath (54) cracks at the impact site in response to absorbing energy from the object, or wherein the rotor remains rotating after being impacted by the object.

10. The method of claim 8, further comprising deflecting the object away from the rotor with the sheath (54) when the object impacts the sheath (54).

11. The method of claim 8, further including adhesively bonding the sheath (54) to the fan blade (42).

12. The method of claim 8, further including forming the sheath (54) from an aluminum alloy.

13. The method of claim 8, further including forming the fan blade (42) from aluminum.

## Patentansprüche

1. Rotor für ein Gebläse eines Gasturbinentriebwerks, der Folgendes umfasst:
eine Rotorscheibe (40); und
eine Gebläseschaufel (42), die sich von der Rotorscheibe (40) radial nach außen erstreckt, wobei die Gebläseschaufel (42) eine Vorderkante (50) aufweist und wobei die Gebläseschaufel (42) aus einem ersten Material ausgebildet ist; und
eine Hülle (54), die sich entlang der Vorderkante (50) der Gebläseschaufel (42) erstreckt, wobei die Hülle (54) aus einem zweiten Material ausgebildet ist, das sich von dem ersten Material unterscheidet; **dadurch gekennzeichnet, dass** das zweite Material ein sprödes Material ist, das eine Molekularstruktur aufweist, die das spröde Material bei einem Trümmer- oder Vogelaufschlag auf die Hülle (54) veranlasst, zu zerbrechen oder zu zersplittern, wobei die Hülle (54) vor einer Ablenkung der Gebläseschaufel (42) aufgrund des Trümmer- oder Vogelaufschlags auf die Hülle (54) zerbricht oder zersplittert, wobei eine globale Ablenkung der Gebläseschaufel (42) aufgrund des Trümmer- oder Vogelaufschlags auf die Hülle (54) durch eine Absorption der Energie von dem Aufschlag durch die Hülle (54) reduziert wird.

2. Rotor nach Anspruch 1, wobei ein Klebstoff die Hülle (54) mit der Vorderkante (50) der Gebläseschaufel (42) verbindet.

3. Rotor nach Anspruch 1, wobei das spröde Material eine Aluminiumlegierung ist.

4. Rotor nach Anspruch 1, wobei das spröde Material ein faserverstärktes Verbundmaterial ist.

5. Rotor nach Anspruch 1, wobei die Gebläseschaufel (42) aus Aluminium besteht.

6. Gasturbinentriebwerk (20), das Folgendes umfasst:
einen Gebläsebereich (22), der einen Rotor nach Anspruch 1 aufweist, wobei die Rotorscheibe (40) eine Vielzahl von Gebläseschaufeln (42) aufweist, die sich von der Rotorscheibe (40) radial nach außen erstrecken, wobei jede Gebläseschaufel (42) eine Vorderkante (50) aufweist und wobei jede Gebläseschaufel (42) aus einem ersten Material ausgebildet ist, und eine Hülle (54), die sich entlang der Vorderkante (50) der Gebläseschaufel (42) erstreckt, wobei die Hülle (54) aus einem zweiten Material ausgebildet ist, das sich von dem ersten Material unterscheidet, wobei das zweite Material ein sprödes Material ist, das eine Molekularstruktur aufweist, die das spröde Material bei einem Trümmer- oder Vogelaufschlag auf die Hülle (54) veranlasst, zu zerbrechen oder zu zersplittern, wobei die Hülle (54) vor einer Ablenkung der Gebläseschaufel (42) aufgrund des Trümmer- oder Vogelaufschlags auf die Hülle (54) zerbricht oder zersplittert, wobei eine globale Ablenkung der Gebläseschaufel (42) aufgrund des Trümmer- oder Vogelaufschlags auf die Hülle (54) durch eine Absorption der Energie von dem Aufschlag durch die Hülle (54) reduziert wird;
einen Verdichterbereich (24) stromabwärts des Gebläsebereichs (22);
einen Brenner (26) stromabwärts des Verdichterbereichs (24); und
einen Turbinenbereich (28) stromabwärts des Brenners (26).

7. Gasturbinentriebwerk (20) nach Anspruch 6, wobei ein Klebstoff die Hülle (54) mit der Vorderkante (50) der Gebläseschaufel (42) verbindet, oder wobei das spröde Material eine Aluminiumlegierung ist, oder wobei das spröde Material ein faserverstärktes Verbundmaterial ist, oder wobei die Gebläseschaufel (42) aus Aluminium besteht.

8. Verfahren zum Schutz eines Rotors eines Garturbinentriebwerks, das Folgendes umfasst:
Bereitstellen des Rotors, wobei der Rotor eine Rotorscheibe (40) und eine Vielzahl von Gebläseschaufeln (42), die sich von der Rotorscheibe (40) radial nach außen erstrecken, aufweist, wobei jede Gebläseschaufel (42) aus einem ersten Material ausgebildet ist und eine Vorderkante (50) und eine Hülle (54), die sich entlang der Vorderkante (50) der Schaufel (42) erstreckt, aufweist, wobei die Hülle (54) aus einem zweiten Material ausgebildet ist, das sich von dem ersten Material unterscheidet, wobei das zweite Material ein sprödes Material ist, das eine Molekularstruktur aufweist, die das spröde Material bei einem Trümmer- oder Vogelaufschlag auf die Hülle (54) veranlasst, zu zerbrechen oder zu zersplittern, wobei die Hülle (54) vor einer Ablenkung der Gebläseschaufel (42) aufgrund des Trümmer- oder Vogelaufschlags auf die Hülle (54) zerbricht oder zersplittert, wobei eine globale Ablenkung der Gebläseschaufel (42) aufgrund des Trümmer- oder Vogelaufschlags auf die Hülle (54) durch eine Absorption der Energie von dem Aufschlag durch die Hülle (54) reduziert wird;
Rotieren des Rotors; und
Aufschlagen eines Objekts auf die Hülle (54) an einer Aufschlagstelle (64), wobei die Hülle (54) an der Aufschlagstelle (64) eine Energie von dem Objekt absorbiert.

9. Verfahren nach Anspruch 8, wobei ein Teil der Hülle (54) an der Aufschlagstelle freigesetzt wird als Reaktion auf das Absorbieren von Energie von dem Objekt, oder wobei die Hülle (54) als Reaktion auf das Absorbieren von Energie von dem Objekt an der Aufschlagstelle zersplittert, oder wobei der Rotor nach dem Aufschlag des Objekts weiterhin rotiert.

10. Verfahren nach Anspruch 8, ferner umfassend ein Ablenken des Objekts mit der Hülle (54) weg von dem Rotor, wenn das Objekt auf die Hülle (54) aufschlägt.

11. Verfahren nach Anspruch 8, ferner einschließend ein Verkleben der Hülle (54) mit der Gebläseschaufel (42).

12. Verfahren nach Anspruch 8, ferner einschließend ein Ausbilden der Hülle (54) aus einer Aluminiumlegierung.

13. Verfahren nach Anspruch 8, ferner einschließend ein Ausbilden der Gebläseschaufel (42) aus Aluminium.

## Revendications

1. Rotor pour un ventilateur d'un moteur à turbine à gaz, comprenant :
un disque de rotor (40) ; et
une pale de ventilateur (42) s'étendant radialement vers l'extérieur depuis le disque de rotor (40), la pale de ventilateur (42) ayant un bord d'attaque (50) et dans lequel la pale de ventilateur (42) est formée d'un premier matériau ; et
une gaine (54) s'étendant le long du bord d'attaque (50) de la pale de ventilateur (42), la gaine (54) étant formée d'un second matériau différent du premier matériau ; **caractérisé en ce que**
le second matériau est un matériau cassant ayant une structure moléculaire amenant le matériau cassant à se briser ou se fissurer lors d'un impact de débris ou d'oiseau sur la gaine (54), dans lequel la gaine (54) se brisera ou se fissurera avant une déflexion de la pale de ventilateur (42) due à l'impact de débris ou d'oiseau sur la gaine (54), dans lequel une déflexion globale de la pale de ventilateur (42) due à l'impact de débris ou d'oiseau sur la gaine (54) est réduite par l'absorption de l'énergie issue de l'impact par la gaine (54).

2. Rotor selon la revendication 1, dans lequel un adhésif assemble la gaine (54) au bord d'attaque (50) de la pale de ventilateur (42).

3. Rotor selon la revendication 1, dans lequel le matériau cassant est un alliage d'aluminium.

4. Rotor selon la revendication 1, dans lequel le matériau cassant est un composite renforcé de fibres.

5. Rotor selon la revendication 1, dans lequel la pale de ventilateur (42) est réalisée en aluminium.

6. Moteur à turbine à gaz (20), comprenant :
une section de ventilateur (22) ayant un rotor selon la revendication 1, le disque de rotor (40) ayant une pluralité de pales de ventilateur (42) s'étendant radialement vers l'extérieur depuis le disque de rotor (40), chaque pale de ventilateur (42) ayant un bord d'attaque (50) et dans lequel chaque pale de ventilateur (42) est formée d'un premier matériau et une gaine (54) s'étendant le long du bord d'attaque (50) de la pale de ventilateur (42), la gaine (54) étant formée d'un second matériau différent du premier matériau, le second matériau étant un matériau cassant ayant une structure moléculaire amenant le matériau cassant à se briser ou se fissurer lors d'un impact de débris ou d'oiseau sur la gaine (54), dans lequel la gaine (54) se brisera ou se fissurera avant une déflexion de la pale de ventilateur (42) due à l'impact de débris ou d'oiseau sur la gaine (54), dans lequel une déflexion globale de la pale de ventilateur (42) due à l'impact de débris ou d'oiseau sur la gaine (54) est réduite par l'absorption de l'énergie issue de l'impact par la gaine (54) ;
une section de compresseur (24) en aval de la section de ventilateur (22) ;
une chambre de combustion (26) en aval de la section de compresseur (24) ; et
une section de turbine (28) en aval de la chambre de combustion (26).

7. Moteur à turbine à gaz (20) selon la revendication 6, dans lequel un adhésif assemble la gaine (54) au bord d'attaque (50) de la pale de ventilateur (42), ou dans lequel le matériau cassant est un alliage d'aluminium, ou dans lequel le matériau cassant est un composite renforcé de fibres, ou dans lequel la pale de ventilateur (42) est réalisée en aluminium.

8. Procédé de protection d'un rotor d'un moteur à turbine à gaz, comprenant :
la fourniture du rotor, le rotor ayant un disque de rotor (40) et une pluralité de pales de ventilateur (42) s'étendant radialement vers l'extérieur depuis le disque de rotor (40), chaque pale de ventilateur (42) étant formée d'un premier matériau et ayant un bord d'attaque (50) et une gaine (54) s'étendant le long du bord d'attaque (50) de la pale (42), la gaine (54) étant formée d'un second matériau différent du premier matériau, le second matériau étant un matériau cassant ayant une structure moléculaire amenant le matériau cassant à se briser ou se fissurer lors d'un impact de débris ou d'oiseau sur la gaine (54), dans lequel la gaine (54) se brisera ou se fissurera avant une déflexion de la pale de ventilateur (42) due à l'impact de débris ou d'oiseau sur la gaine (54), dans lequel une déflexion globale de la pale de ventilateur (42) due à l'impact de débris ou d'oiseau sur la gaine (54) est réduite par l'absorption de l'énergie issue de l'impact par la gaine (54) ;
la rotation du rotor ; et
le fait de heurter la gaine (54) avec un objet au niveau d'un site d'impact (64), la gaine (54) absorbant l'énergie issue de l'objet au niveau du site d'impact (64).

9. Procédé selon la revendication 8, dans lequel un morceau de la gaine (54) au niveau du site d'impact est libéré en réponse à l'absorption d'énergie issue de l'objet, ou dans lequel la gaine (54) se fissure au niveau du site d'impact en réponse à l'absorption d'énergie issue de l'objet, ou dans lequel le rotor continue de tourner après avoir été heurté par l'objet.

10. Procédé selon la revendication 8, comprenant en outre la déflexion de l'objet en éloignement du rotor avec la gaine (54) lorsque l'objet heurte la gaine (54).

11. Procédé selon la revendication 8, comportant en outre la liaison adhésive de la gaine (54) à la pale de ventilateur (42).

12. Procédé selon la revendication 8, comportant en outre la formation de la gaine (54) à partir d'un alliage d'aluminium.

13. Procédé selon la revendication 8, comportant en outre la formation de la pale de ventilateur (42) à partir d'aluminium.
